# EUROPÄISCHE PATENTSCHRIFT

(11) **EP 1 069 662 B1**
(45) Veröffentlichungstag und Bekanntmachung des Hinweises auf die Patenterteilung: **20.08.2003**
(21) Anmeldenummer: 00440144.4
(22) Anmeldetag: 19.05.2000
(51) Int. Cl.: H02G 1/08, H02G 9/06, G02B 6/44, G02B 6/50

(54) **Vorrichtung zum Einführen und/oder Herausführen eines Kabels**
Device for introducing and/or extracting a cable
Dispositif pour insérer et/ou extraire un câble

(30) Priorität: 13.07.1999 DE 19932581
(43) Veröffentlichungstag der Anmeldung: 17.01.2001
(73) Patentinhaber: ALCATEL, 75008 Paris (FR)
(72) Erfinder: Gregor, Paul, 46145 Oberhausen (DE); Kuhn, Lothar, 47249 Duisburg (DE)
(74) Vertreter: Rausch, Gabriele, Dr.

(56) Entgegenhaltungen:
- DE-A- 19 734 274

## Beschreibung

Die Erfindung betrifft eine Vorrichtung zum Einführen und/oder Herausführen eines Kabels, insbesondere eines optischen Nachrichtenkabels, in eine bzw. aus einer rohrförmigen Leitung.

Im Zuge der Errichtung neuer Kabelanlagen für die Telekommunikation durch regionale und kommunale Unternehmen wird in zunehmendem Maße aus wirtschaftlichen und/oder organisatorischen Gründen über Alternativlösungen zur herkömmlichen Verlegung von Telekommunikationskabeln unmittelbar im Erdreich nachgedacht. Eine sich insbesondere aus wirtschaftlichen Gründen anbietende alternative Verlegetechnik für Telekommunikationskabel ist die Nutzung von im Rohr- bzw. Kanalnetz eines Versorgungssystems einer Stadt oder einer Ortschaft vorhandenen Gas- und Wasserleitungen. Eine solche Lösung ist in der DE 30 01 226 A1 beschrieben. Neben der Reduzierung der Kosten zum Aufbau eines städtischen oder regionalen Telekommunikationsnetzes sind durch die Nutzung der vorhandenen Leitungen nur in geringem Umfang Erdarbeiten erforderlich, so daß der insbesondere in Städten oft enge Verkehrsraum wenig beeinträchtigt wird. Zudem stellt bei dieser neuen Verlegetechnik die in vielen Fällen bereits dichte Trassenbelegung mit Leitungen aller Ver- und Entsorgungssparten kein wesentliches Problem dar, sondern kann sogar von Vorteil sein.

Zum Aufbau eines Telekommunikationsnetzes unter Verwendung von einen vergleichweise kleinen Außendurchmesser aufweisenden optischen Kabeln einschließlich der Anbindungsmöglichkeit für später zuzuschaltende Teilnehmer bietet sich daher aus technischen und organisatorischen Gründen sowie aus Gründen des Wegerechts die Verlegung von optischen Nachrichtenkabeln z. B. in Frischwasserleitungen des vorhandenen Versorgungsnetzes an. Dabei ist größter Wert auf die Trinkwasser-Neutralität des Kabelmaterials, insbesondere des Kabelmantels, sowie auf die Längswasserdichtheit und eine dauerhaft sichere Permeationssperre des Kabels gegenüber Wasserdampf zu legen. Darüber hinaus ist beim Einführen des Kabels in die Leitung durch besondere Sorgfalt dafür zu sorgen, daß in der Leitung keine Verkeimung oder andere mikrobiologische Verunreinigungen auftreten.

Eine zusätzliche Schwierigkeit bei der Verlegung von Kabeln in Trinkwasserleitungen besteht darin, daß in Trinkwasserleitungen in Abständen von etwa 150 bis 250 m Schieber oder andere Absperrvorrichtungen zum Absperren der Frischwasserleitung angeordnet sind. An diesen Absperrstellen muß das Kabel ohne irgendwelche Beeinträchtigungen mechanischer oder optischer Art um den Schieber herumgeführt werden, indem das Kabel vor dem Schieber aus der rohrförmigen Leitung herausgeführt und hinter dem Schieber wieder in die rohrförmige Leitung eingeführt wird. Zudem ist es auch für die Erstellung von Teilnehmeranschlüssen oder Abzweigen erforderlich, ein optisches Kabel aus der rohrförmigen Leitung heraus oder in die rohrförmige Leitung hinein zu führen.

Aus der DE 297 22 107 U ist eine Vorrichtung nach dem Oberbegriff des Anspruchs 1 bekannt, bei dem das Kabel gegenüber dem Gehäuse durch ringförmige Dichtelemente abgedichtet ist. Die innere Bohrung der Dichtelemente ist so bemessen, daß das Kabel leichtgängig hindurchgeführt werden kann. Die Abdichtung erfolgt durch axiales Verspannen der Dichtelemente, wobei sich diese sowohl an das Kabel als auch an die Innenwand des Gehäuses anpressen. Die Dichtelemente bestehen demgemäß aus einem elastischen Material z. B. Gummi.

Diese Art der Abdichtung ist für Drücke bis zu 15 bar geeignet, bei höheren Drücken ist die erforderliche Sicherheit nicht mehr gegeben. Darüberhinaus muß befürchtet werden, daß bei einer Leitung für den Gastransport das Gas durch die Dichtelemente hindurchdiffundieren kann.

Der vorliegenden Erfindung liegt die Aufgabe zugrunde, die Vorrichtung der eingangs erwähnten Art dahingehend weiterzubilden, daß diese auch bei höchsten Drücken, wie sie in Gasleitungen zum Ferntransport vorliegen können, verwendbar ist. Insbesondere soll die Vorrichtung Drücke von über 40 bar aushalten können, ohne daß ein Gasaustritt befürchtet werden muß.

DE 197 34 274 offenbart eine Vorrichtung zum Einführen und/oder Herausführen eines Kabels in der Form von T-Schenkeln, wobei die Abdichtung zwischen dem Kabel und den Durchführungsöffnungen durch eine gegenseitige Verlötung zwischen dem Lichtwellenleiter mit Metallbeschichtung und einer metallischen Durchführungsöffnung erfolgt. Diese Lösung ist dennoch nicht ideal, wenn man der Abdichtung eine bestimmte mechanische Festigkeit geben möchte.

Diese Aufgaben werden durch die im Kennzeichen des Anspruchs 1 erfaßten Merkmale gelöst.

Weitere vorteilhafte Ausgestaltungen sind in den Unteransprüchen erfaßt.

Der wesentliche Vorteil der Erfindung ist darin zu sehen, daß durch die Verschweißung des Kabels mit dem Gehäuse zum einen eine hervorragende Gasdichtung erreicht wird, zum anderen auch die durch den Innendruck auftretenden Kräfte sicher aufgefangen werden.

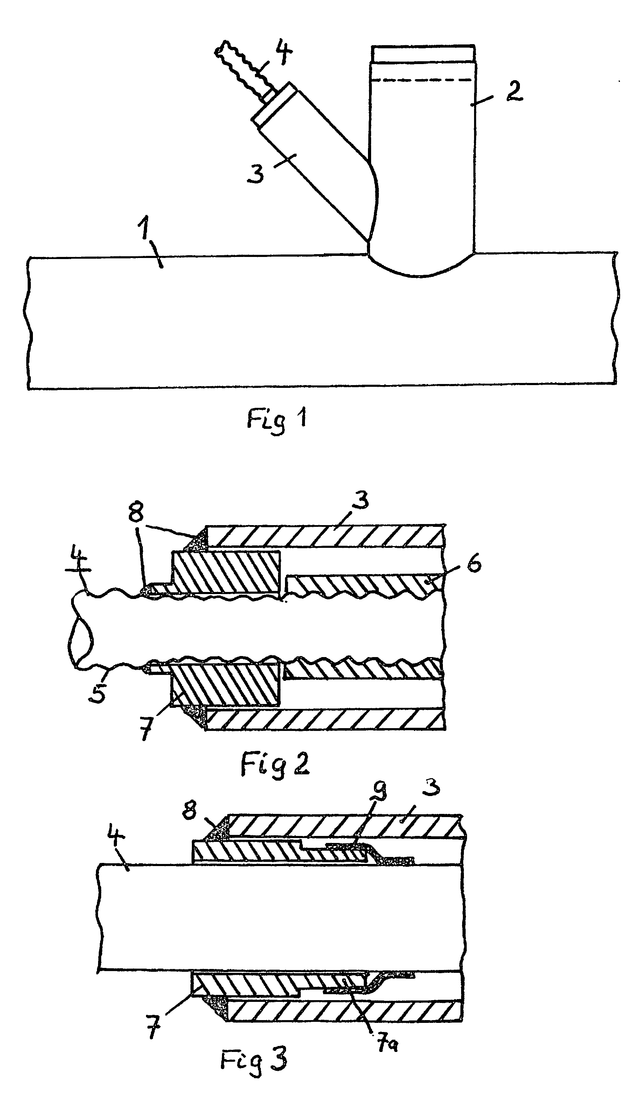

Die Erfindung ist anhand der in den Figuren 1 bis 3 schematisch dargestellten Ausführungsbeispiele näher erläutert.

Figur 1 zeigt einen Abzweig eines Gasleitungsrohres 1 mit einem Aufschweißstutzen 2 sowie einem Einlaßstutzen 3 für ein Kabel 4. Da in dem Gasleitungsrohr 1 ein hoher Druck von u.U. mehr als 40 bar vorherrscht, muß der Spalt zwischen dem Einlaßstutzen 3 und dem Kabel 4 sicher abgedichtet sein.

In der Figur 2 ist ein Kabel 4 mit einem Stahlwellmantel 5 und einem Kunststoffmantel 6 vorgesehen. Der Kunststoffmantel ist im Bereich des Einlaßstutzens 3 entfernt und eine Metallhülse 7 auf den Stahlwellmantel 5 soweit aufgeschoben, daß der Stahlwellmantel 5 über eine bestimmte Länge aus der Metallhülse 7 herausschaut. Die Metallhülse 7 ist mit dem Einlaßstutzen 3 und mit dem Stahlwellmantel 5 wie bei 8 gezeigt - verschweißt oder verlötet.

Durch die Verschweißung ist das Kabel 4 mechanisch fest in dem Einlaßstutzen 3 festgelegt und der Spalt zwischen dem Kabel 4 und dem Einlaßstutzen druckdicht verschlossen.

Fig. 3 zeigt den Abdichtbereich des Einlaßstutzens 3 für ein Kabel 4 mit einem nicht abgesetzten Kunststoffmantel.

Die Metallhülse 7 ist wie bei 8 gezeigt mit dem Einlaßstutzen 3 druckdicht verschweißt. An ihrem der Schweißstelle 8 entgegengesetzten Ende weist die Metallhülse 7 einen Absatz 7a auf, auf dem ein Schrumpfschlauch 9 aufsitzt, der sich bis auf den Kunststoffmantel des Kabels 4 ertreckt. Damit ist der Spalt zwischen dem Kabel 4 und der Metallhülse 7 dauerhaft abgedichtet.

An Stelle des Schrumpfschlauches kann auch ein aufgeweiteter Elastomerschlauch verwendet werden, der auf den Absatz 7a aufgerollt ist und nach dem Aufschieben der Metallhülse 7 auf das Kabel 4 zum Teil abgerollt werden kann und sich dann auf der Kabeloberfläche unter Vorspannung abstützt.

Eine weitere Möglichkeit der Abdichtung zwischen Metallhülse 7 und Kabel 4 besteht in einer Kleberbeschichtung der inneren Oberfläche der Metallhülse 7.

## Patentansprüche

1. Vorrichtung zum Einführen und/oder Herausführen eines Kabels, insbesondere eines optischen Nachrichtenkabels, in eine bzw. aus einer rohrförmigen Leitung, wobei an der Leitung ein flanschartiges Gehäuse befestigt ist, durch welches das Kabel herein- oder herausgeführt ist, der Spalt zwischen dem Kabel und dem Gehäuse abgedichtet ist, und das Kabel zumindest im Bereich des Gehäuses eine metallische Umhüllung aufweist, **dadurch gekennzeichnet, dass** die Abdichtung durch Verschweißen der metallischen Umhüllung mit dem Gehäuse (3) und/oder einer zwischen der Umhüllung und dem Gehäuse (3) angeordneten Metallhülse (7) erfolgt, und dass die metallische Umhüllung als metallischer Mantel ausgeführt ist, der sich über die gesamte Länge des Kabels erstreckt.

2. Vorrichtung nach Anspruch 1, **dadurch gekennzeichnet, dass** auf das Ende des Kabels (4) eine Metallhülse (7) aufgeschoben ist, die gegenüber dem Kabel (4) abgedichtet ist.

3. Vorrichtung nach Anspruch 2, **dadurch gekennzeichnet, dass** die Abdichtung mittels eines Schrumpfschlauches (9) oder eines auf der Metallhülse (7) aufsitzenden aufgeweiteten Elastomerschlauches erfolgt.

4. Vorrichtung nach Anspruch 2, **dadurch gekennzeichnet, dass** die Abdichtung durch einen Kleber erfolgt.

## Claims

1. Device for introducing and/or extracting a cable, in particular an optical communication cable, into or from a tubular conduit, wherein a flange-like casing, through which the cable can be guided in or out, is fastened to the said conduit, the gap between the cable and the casing is sealed off, and the cable has a metal covering, at least in the region of the casing, **characterised in that** the sealing-off operation takes place by the welding of the metal covering to the casing (3) and/or to a metal sleeve (7) disposed between the covering and the said casing (3), and that the said metal covering is designed as a metal sheath which extends over the entire length of the cable.

2. Device according to claim 1, **characterised in that** a metal sleeve (7), which is sealed off from the cable (4), is pushed onto the end of the said cable (4).

3. Device according to claim 2, **characterised in that** the sealing-off operation takes place by means of a shrink-on hose (9) or of an expanded elastomer hose which is seated on the metal sleeve (7).

4. Device according to claim 2, **characterised in that** the sealing-off operation takes place by means of an adhesive.

## Revendications

1. Dispositif pour faire entrer et/ou faire sortir un câble, notamment un câble d'informations optique, dans une ou respectivement hors d'une conduite tubulaire, un boîtier en forme de flasque, à travers lequel on fait entrer et/ou sortir le câble, étant fixé sur la conduite, l'interstice entre le câble et le boîtier étant rendu étanche, et le câble présentant, au moins dans la zone du boîtier, une enveloppe métallique,
**caractérisé en ce que** l'étanchéité est effectuée par soudage de l'enveloppe métallique au boîtier (3) et/ou à un manchon métallique (7) disposé entre l'enveloppe et le boîtier (3), et **en ce que** l'enveloppe métallique est réalisée en tant que gaine métallique qui s'étend sur toute la longueur du câble.

2. Dispositif selon la revendication 1, **caractérisé en ce que** sur l'extrémité du câble (4) est emmanché un manchon métallique (7) qui est rendu étanche par rapport au câble (4).

3. Dispositif selon la revendication 2, **caractérisé en ce que** l'étanchéité est effectuée au moyen d'une gaine souple rétractable (9) ou d'une gaine souple en élastomère, évasée, placée sur le manchon métallique (7).

4. Dispositif selon la revendication 2, **caractérisé en ce que** l'étanchéité est effectuée par une colle.
